(19) Europäisches Patentamt
European Patent Office
Office européen des brevets

(11) **EP 0 760 144 B1**

(12) **EUROPÄISCHE PATENTSCHRIFT**

(45) Veröffentlichungstag und Bekanntmachung des Hinweises auf die Patenterteilung:
**23.05.2001 Patentblatt 2001/21**

(21) Anmeldenummer: **96906744.6**

(22) Anmeldetag: **06.03.1996**

(51) Int Cl.⁷: **G06K 9/34**, G06K 9/42

(86) Internationale Anmeldenummer:
**PCT/EP96/00953**

(87) Internationale Veröffentlichungsnummer:
**WO 96/27847 (12.09.1996 Gazette 1996/41)**

(54) **VERFAHREN ZUR VERBESSERUNG DER ERKENNUNG VON MASCHINENSCHRIFTEN MIT FESTER SCHRIFTTEILUNG**

PROCESS FOR IMPROVING THE RECOGNITION OF TYPED TEXT WITH FIXED CHARACTER SPACING

PROCEDE PERMETTANT D'AMELIORER LA RECONNAISSANCE DE TEXTES DACTYLOGRAPHIES COMPORTANT UN ESPACE FIXE ENTRE LES CARACTERES

(84) Benannte Vertragsstaaten:
**DE FR GB IT**

(30) Priorität: **08.03.1995 DE 19508135**

(43) Veröffentlichungstag der Anmeldung:
**05.03.1997 Patentblatt 1997/10**

(73) Patentinhaber: **SIEMENS AKTIENGESELLSCHAFT 80333 München (DE)**

(72) Erfinder:
• **GRUSCHEL, Wolfgang D-78462 Konstanz (DE)**
• **MILETZKI, Udo D-78465 Konstanz (DE)**

(56) Entgegenhaltungen:
• **IBM TECHNICAL DISCLOSURE BULLETIN, Bd. 14, Nr. 10, März 1972, NEW YORK, US, Seiten 3104-3107, XP002006411 ANONYMOUS: "Character Pitch Determination. March 1972."**
• **IBM TECHNICAL DISCLOSURE BULLETIN, Bd. 23, Nr. 3, August 1980, NEW YORK, US, Seite 1194 XP002006412 ANONYMOUS: "Segmentation Method for Fixed Pitch and Machine Printed Documents. August 1980."**

• **PROCEEDINGS OF THE IEEE COMPUTER SOCIETY CONFERENCE ON COMPUTER VISION AND PATTERN RECOGNITION, WASHINGTON, DC, USA, 19-23 JUNE 1983, ISBN 0-8186-0053-5, 1983, SILVER SPRING, MD, USA, IEEE COMPUT. SOC. PRESS, USA, Seiten 515-516, XP002006413 DOSTER W ET AL: "A step towards intelligent document input to computers"**
• **WISSENSCHAFTLICHE BERICHTE A. E. G., Bd. 47, Nr. 3/4, 1974, Seiten 90-99, XP002006414 J. SCHÜRMANN: "Bildvorbereitung für die automatische Zeichenerkennung"**
• **PROCEEDINGS OF THE 5TH INTERNATIONAL CONFERENCE ON PATTERN RECOGNITION, MIAMI BEACH, FL, USA, 1-4 DEC. 1980, 1980, NEW YORK, NY, USA, IEEE, USA, Seiten 24-26, XP002006415 TAN H S ET AL: "Automatic pitch measurement"**
• **NEC RESEARCH AND DEVELOPMENT, JULY 1985, JAPAN, Nr. 78, ISSN 0547-051X, Seiten 23-30, XP002006416 TSUJI Y ET AL: "Character image segmentation, based upon minimum variance criterion"**

**Beschreibung**

Die vorliegende Erfindung betrifft ein Verfahren zur Verbesserung der Lesequalität automatischer Lesesysteme (optical character recognition OCR) bei Maschenschriften fester Schriftteilung. Übliche Schriften mit fester Teilung weisen z.B. 10. 12 oder 15 Zeichen/Zoll auf.

Automatische Lesesysteme werden z.B. in Briefverteilanlagen eingesetzt. um die Verteilung von Postsendungen entsprechend der gelesenen Postleitzahlen in die bestimmten Postleitzahlen zugeordneten Verteilfächer zu steuern.

Automatische Lesesysteme lassen sich in zwei Teilsysteme gliedern. von denen das erste Teilsystem die Aufgabe der eigentlichen Bildvorbereitung hat und das zweile Teilsystem die Aufgabe der eigentlichen Erkennung.

Die zu erkennenden Zeichen liegen zunächst im optischen Bereich vor und werden für die weitere Bearbeitung mittels eines Abtasters, vorzugsweise eines integrierten Halbleiterabtasters. gewandelt. Für die weitere Verarbeitung wird die kontinuierlich gemessene Schwärzung im allgemeinen unmittelbar in eine Schwarz-Weiß-Entscheidung, also in schwarze und weiße Bildpunkte umgewandelt. Aus diesem Abbild der Vorlage werden Textausschnitte, Zeilen und schließlich Einzelzeichen herauspräpariert und die dabei anfallenden Zeichenbilder von offensichtlich erkennbaren Störungen befreit.

Bei bekannten Verfahren führen nicht zu den Schriftzeichen gehörende Schwärzungen (z.B. Kohleschatten auf Kreditkartendurchschlägen) oder an Zeichen fehlende Teile (z.B. bei zerfallenen Zeichen auf schlechten Kopien) zu Beeinträchtigungen der automatischen Schriftzeichenerkennung.

In PROCEEDINGS OF THE IEEE COMPUTER SOCIETY CONFERENCE ON COMPUTER VISION AND PATTERN RECOGNITION, WASHINGTON, DC, USA, 19-23 JUNE 1983, ISBN 0-8186-0053-5, 1983, SILVER SPRING, MD, USA, IEEE COMPUT. SOC. PRESS, USA, Seiten 515-516, XP002006413 DOSTER W ET AL: 'A step towards intelligent document input to computers' wird ein allgemeiner Überblick über die verschiedenen Schritte bei der automatischen Schrifterkennung, von der Bildaufnahme, über Digitalisierung, Kategorisierung in Text- und Grafikbereiche, Segmentierung bis zur Zeichenerkennung, gegeben. Einrahmungen der Segmente und Feststellung der Geometriedaten dienen hierbei lediglich dazu, verdächtige Zeichenbilder zu erkennen, z.B. verklebte oder zerfallende Zeichen, um sie anschließend zu rekonstruieren, d.h. die verklebten Zeichen zu zerschneiden und die zerfallenden Zeichen zusammenzufügen.

Ein in IBM TECHNICAL DISCLOSURE BULLETIN, Bd. 23, Nr. 3, August 1980, NEW YORK, US, Seite 1194 XP002006412 ANONYMOUS: 'Segmentation Method for Fixed Pitch and Machine Printed Documents. August 1980' beschriebenes Segmentierungsverfahren für Maschinenschrift fester Teilung versucht, Segmentierungsfehlern infolge von Verzerrungen, die bei der Bedruckung oder beim Kopieren entstehen, entgegenzuwirken, indem anstelle des ursprünglichen, aus der bekannten charakteristischen Periode gewonnenen Rasters durch Auswertung (Verzerrungsanalyse) der tatsächlichen Position jedes Segments ein Raster mit verbessertem Startpunkt berechnet wird, um die Abweichungen der variierenden Zeichenmittenabstände von der Standard-Schriftteilung auszugleichen. Eine Prüfung der Geometriedaten auf Übereinstimmung mit der charakteristischen Zeichengeometrie findet nur dazu statt, um die von zerfallenen oder verklebten Zeichen verursachten irreführenden Geometriedaten von der Verzerrungsanalyse auszuschließen.

Aufgabe der vorliegenden Erfindung ist es daher, ein Verfahren zum Lesen von Maschinenschriften fester Schriftteilung anzugeben, das zu einer Verbesserung der Lesequalität bei nicht zu den Schriftzeichen gehörenden Schwärzungen oder bei an den Zeichen fehlenden Teilen führt.

Erfindungsgemäß wird diese Aufgabe durch ein Verfahren nach Anspruch 1 erreicht. Vorteilhafte Ausgestaltungen des Verfahrens sind den Unteransprüchen und der folgenden Beschreibung zu entnehmen.

Bei dem Verfahren werden zunächst die Schwärzungssegmente aus einem einheitlich bedruckten Gebiet eines Dokuments, für das eine für die betreffende Schriftart charakteristische Zeichengeometrie angegeben werden kann, mit umschreibenden Rechtecken versehen und die Geometriedaten der so erhaltenen Rechtecke festgestellt. Dann werden aus diesen Rechtecken diejenigen Rechtecke ermittelt, deren Geometriedaten mit der charakteristischen Zeichengeometrie innerhalb der vorgegebenen Toleranz übereinstimmen (gute Zeichen). Aus den Werten dieser. innerhalb der vorgegebenen Toleranz liegenden Rechtecke. werden Zeichenerwartungszonen berechnet, die jeweils so bemessen sind, daß sie ein an dieser Stelle gedachtes Zeichen mit idealen Geometriedaten umschreiben. Zum Lesen werden nur die Schwärzungen der guten Zeichen und die Inhalte der Zeichenerwartungszonen verwandt. Außerdem ist die Erkennung abgeschnittener Schwärzungssegmente innerhalb der umschreibenden Rechtecke durch die Lage des verstümmelten Schwärzungssegments innerhalb des Rechtecks vereinfacht oder dadurch erst möglich. Die Geometriedaten der charakteristischen Zeichengeometrie umfassen die relative Lage der umschreibenden Rechtecke auf der x-Achse und deren Breite w. So kann bei Nicht-Normschriften nur in x-Richtung korrigiert werden. bei Normschriften umfassen die Geometriedaten der charakteristischen Zeichengeometrie zusätzlich vorteilhafterweise auch die Lage der Rechtecke in y-Richtung und deren Höhe H. So wird auch Schmutz ober- und unterhalb der Rechtecke weggefiltert.

Vorteilhafterweise ersetzt man ein Rechteck, das bestimmte Toleranzen nicht aufweist. dann nicht durch die entsprechende ideale Zeichenerwartungszone. wenn die Größenunterschiede zwischen beiden so gering sind, daß durch die Verwendung der idealen Zeichenerwartungszone das in dem Rechteck befindliche Zeichen um winzige Teile abgeschnitten oder das Rechteck unnötig um winzige Beträge aufgeweitet würde. Die Erfindung wird nachfolgend anhand der Figuren für besonders bevorzugte Ausführungsbeispiele näher erläutert.

Es zeigen:

Fig. 1 ein einheitlich bedrucktes Gebiet eines Dokuments (Zeichenensemble) bei normaler Bedruckung.

Fig. 2 das Zeichenensemble aus Fig. 1 bei schlechter Bedruckung mit umschreibenden Rechtecken.

Fig. 3 das Zeichenensemble aus Fig. 2 mit konstruierten Zeichenerwartungszonen.

Fig. 4 ein Zeichenensemble mit Normschrift bei schlechter Bedruckung.

Fig. 5 das Zeichenensemble aus Fig. 4 mit umschreibenden Rechtecken.

Fig. 6 das Zeichenensemble aus Fig. 4 mit Rechtecken. die die Toleranz einhalten. und Zeichenerwartungszonen.

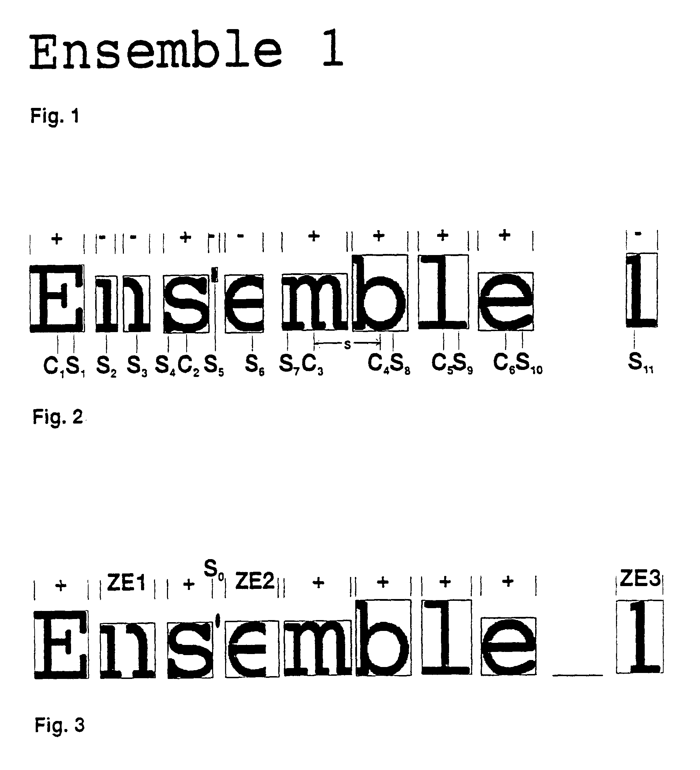

Zunächst werden die vorhandenen Schwärzungssegmente eines Zeichenensembles mit Rechtecken umschrieben und die so entstandenen Rechtecke vermessen (Fig 2). Die Rechtecke, die die erwartete Breite w innerhalb einer bestimmten Toleranz aufweisen und deren Schwerpunkte in x-Richtung $c_i$ (i = Index) ermittelt werden, werden als gute Zeichen angesehen, wie in den Figuren mit - dargestellt. Unter Zeichenmittenabstand s wird der Abstand der Mittelsenkrechten der Zeichenbegrenzungen zweier nebeneinander stehender Zeichen einer Druckzone verstanden. Anschließend werden aus den Werten $c_i$ und s die Lagen in x-Richtung und die Breite w der Rechtecke für die Zeichenerwartungszonen ZE berechnet (Fig. 3). Die Schwärzungssegmente $S_0$, die außerhalb der Rechtecke der guten Zeichen oder der Zeichenerwartungszonen ZE liegen, werden zum Lesen nicht berücksichtigt. Mehrere Schwärzungssegmente, die innerhalb einer Zeichenerwartungszone liegen. werden durch die jeweiligen Zeichenerwartungszonen zusammengefaßt. z. B. die Schwärzungssegmente $S_2$ und $S_3$ in Fig. 2 durch die Zeichenerwartungszone ZE1 in Fig. 3.

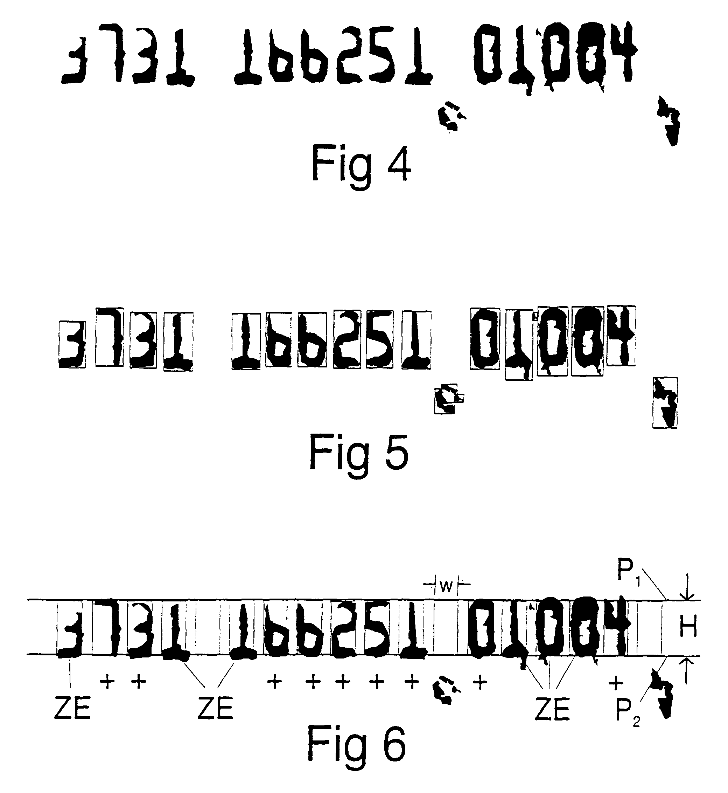

Sofern eine Normschrift vorliegt, wie sie in den Fig. 4-6 dargestellt ist, d. h., daß die guten Zeichen auch die gleiche Höhe H innerhalb einer Toleranz aufweisen. werden vorteilhafterweise nach der Rechteckbildung (Fig. 5) aus den Rechtecken, die die Höhe H aufweisen, durch Regressionsanalyse zwei Parallelen P1, P2 bestimmt. die die obere und untere Begrenzung der Zeichenerwartungszonen ZE darstellen. Man kann auch eine Parallele P1, P2 bestimmen und die zweite Parallele P2, P1 im Abstand von der Höhe H legen. Die Berechnung der seitlichen Begrenzung der Zeichenerwartungszonen verläuft wie zuvor für die Fig. 2 und 3 beschrieben. Außerhalb der Rechtecke, die die guten Zeichen umschreiben, und der Zeichenerwartungszonen liegender Schmutz D kann somit bei Normschriften nicht nur seitlich, sondern auch ober- und unterhalb der Zeichen weggefiltert werden. Nachfolgend wird ein besonders bevorzugtes Verfahren zur Bestimmung der seitlichen Begrenzung der Zeichenerwartungszonen beschrieben. Hat man ein Zeichenensemble. dessen Schwärzungssegmente (=Schwarzobjekte, einheitlich gefärbte Zusammenhangsgebiete), ganzheitlich betrachtet, in ein einheitliches Raster passen würden (1 Bedruckungsvorgang), dann kann man eine Anpassung der umschreibenden Rechtecke in x-Richtung vornehmen, um die Zeichenerwartungszonen zu erhalten. Dazu konstruiert man. bildlich gesprochen, einen Kamm mit einem Zinkenabstand, der dem Zeichenmittenabstand s entspricht. Um jeden Zinken wird dann ein umschreibendes Rechteck mit der Breite w zentriert. Anschaulich ist sofort klar, daß neben dem Zinkenabstand auch die Position des ersten Kammzinkens variiert werden muß, um die richtige Anpassung der umschreibenden Rechtecke zu erreichen.

Vorteilhafterweise generiert man hierzu zuerst ein Raster mit der Periodizität des charakteristischen Zeichenmittenabstands s, mit Startpunkt am Schwerpunkt $c_1$ des ersten guten Zeichens Z des Zeichenensembles. Anschließend paßt das Verfahren das Raster hinsichtlich Startpunkt und Periodizität durch globale Fehlerbetrachtung optimal an das Ensemble aller guten Zeichen Z an. Es folgt die genaue Beschreibung des Verfahrens.

Ausgangspunkt für die Berechnung der Werte $m_i$ der linken Begrenzung xmin der Zeichenerwartungszonen sind die eindimensionalen Schwerpunkte (in x) $c_i$ der guten Zeichen Z. Weitere Variablen und Parameter sind:

d: durch das Verfahren korrigierter Wert für den Zeichenmittenabstand s
r: x-Position der Punkte des ursprünglichen Rasters
R: Merker für r
s: charakteristischer Zeichenmittenabstand
t: Toleranzwert (tol)
T: t + s/2
x: xmin-Werte potentieller Zeichenerwartungszonen

$x_a$:    x-Anfang des Zeichenensembles
$x_e$:    x-Ende des Zeichenensembles
$x_i$:    für Regression
        > liefern Koeffizienten a, b
$z_i$:    für Regression
w:    charakteristische Zeichenbreite

Damit läßt sich das Verfahren zur Gewinnung der $m_i$ wie folgt beschreiben:

$r = c_1$ , R=0      Startpunkt des Rasters setzen. Merker resetieren

Für alle guten Zeichen Z (Index i = bis Anzahl n der Z):

Solange $r + T < c_i$ : r(neu) = r(alt) + s      Solange um s vorwärts, bis nächster Z-Schwerpunkt mindestens erreicht
Falls r = R : r(neu) = r(alt) + s      um zu vermeiden. daß 2 mal der gleiche r-Wert generiert wird.
R=r      Position r des Rasterpunkts merken
$x_i = r - c_1$      Distanz vom Ausgangspunkt $c_1$
$z_i = c_i - r$      x-Differenz: Zwischen dem Z-Schwerpunkt und dem benachbarten Rasterpunkt
i(neu) = i(alt) + 1      Index des nächsten guten Zeichens Z.

Man stellt ein lineares Modell auf:

$$z_i = a + bx_i + u_i$$

($u_i$ = Residuen bzw. Zufallsfehler im Punkt $x_i$).
Die Ausgleichsgerade lautet: $z = a + bx_i$
Für den Abstand der Meßpunkte $P(x_i, z_i)$ von der Ausgleichsgeraden gilt:

$$d_i = |z_i - (a + bx_i)|$$

Die Ausgleichsgerade wird so gelegt, daß die Summe der Quadrate aller vertikalen Abstände der Punkte von der Geraden ein Minimum wird:

$$S = \sum_{i=1}^{n} d_i^2 = \sum_{i=1}^{n} (z_i - (a + bx_i))^2 \longrightarrow Minimum$$

Dies bedeutet, daß die folgenden partiellen Ableitungen verschwinden:

$$\frac{\partial S}{\partial a} = 0; \frac{\partial S}{\partial b} = 0.$$

D.h.:

$$\frac{\partial S}{\partial a} = -2\sum_{i=1}^{n} (z_i - (a + bx_i)) = 0$$

$$\frac{\partial S}{\partial b} = -2\sum_{i=1}^{n}(z_i - (a + bx_i))x_i = 0$$

Vereinfacht man diese beiden Gleichungen, so erhält man das reguläre Gleichuncssvstem

$$na + b\sum_{i=1}^{n}x_i = \sum_{i=1}^{n}z_i$$

$$a\sum_{i=1}^{n}x_i + b\sum_{i=1}^{n}x_i^2 = \sum_{i=1}^{n}x_iz_i$$

für a und b.

Dessen Lösung egibt sich mittels elementarer Methoden der linearen Algebra (z.B. Darstellung als lineares Gleichungssystem mit Koeffizientenmatrix und Anwendung der Cramerschen Regel):

$$a = \frac{(\sum_{i=1}^{n}z_i)(\sum_{i=1}^{n}x_i^2) - (\sum_{i=1}^{n}x_i)(\sum_{i=1}^{n}x_iz_i)}{n\sum_{i=1}^{n}x_i^2 - (\sum_{i=1}^{n}x_i)^2},$$

$$b = \frac{n\sum_{i=1}^{n}x_iz_i - (\sum_{i=1}^{n}x_i)(\sum_{i=1}^{n}z_i)}{n\sum_{i=1}^{n}x_i^2 - (\sum_{i=1}^{n}x_i)^2}.$$

| | |
|---|---|
| $x = c_1 + a - w/2$ | korrigierter xmin-Wert des Rechtecks des ersten guten Zeichens |
| $d = (1+b)s$ | korrigierter Wert für den Zeichenmittenabstand |
| Solange $x > x_a$: x(neu) = x(alt) - d | rückwärts in Richtung Ensemble-Anfang |
| Falls $x_a - x > T$ : x(neu) = x(alt) + d | falls zu weit, wieder um d vorwärts |

Damit können schließlich die Werte $m_i$ der linken Begrenzung xmin der Zeichenerwartungszonen erzeugt werden:

Solange $x < x_e$ : x(neu) = x(alt) + d, i(neu) = i(alt) + 1,

**$m_i = x$**    vorwärts zum Ensemble-Ende.

Falls $m_{max(i)} > x_e - w + t'$: max(i) = max(i) - 1 falls zu weit, letzten xmin-Wert "kippen" durch Mindern des Maximums von Index i,

wobei t' ein "Sicherheitsparameter" im Wertebereich [0, 2t] ist. Bei Schriften mit sehr enger Zeichenlücke wird t' = 2t empfohlen, bei anderen Schriften t'=0, z.B. bei der Schrift Farrington 7B.

**EP 0 760 144 B1**

**Patentansprüche**

1. Verfahren zur Verbesserung der Erkennung von Maschinenschriften mit fester Schriftteilung, bei dem die Schwärzungssegmente S aus einem einheitlich bedruckten Gebiet eines Dokuments, für das eine für die betreffende Schriftart charakteristische Zeichengeometrie angegeben werden kann, mit umschreibenden Rechtecken versehen werden und die Geometriedaten der so erhaltenen Rechtecke festgestellt werden, dadurch gekennzeichnet,

   dass aus den Geometriedaten der Rechtecke, die mit der charakteristischen Zeichengeometrie innerhalb einer vorgegebenen Toleranz übereinstimmen, ideale Zeichenerwartungszonen für die Rechtecke berechnet werden, deren Geometriedaten außerhalb der vorgegebenen Toleranz liegen,

   dass zur Erkennung eines Einzelzeichens jeweils die gesamten Bilddaten herangezogen werden, die innerhalb der idealen Zeichenerwartungszone oder des Rechtecks, dessen Geometriedaten mit der charakteristischen Zeichengeometrie innerhalb der vorgegebenen Toleranz übereinstimmen, liegen.

2. Verfahren nach Anspruch 1, dadurch gekennzeichnet,
   dass die Geometriedaten die Breite und relative Lage der Rechtecke in x-Richtung umfassen.

3. Verfahren nach Anspruch 2, dadurch gekennzeichnet,
   daß bei Normschriften und Großbuchstabenschriften die Geometriedaten zusätzlich Höhe und Lage der Rechtecke in y-Richtung umfassen.

4. Verfahren nach einem der vorstehenden Ansprüche, dadurch gekennzeichnet,
   daß Rechtecke, deren Geometriedaten außerhalb der Toleranz liegen. dann durch eine ideale Zeichenerwartungszone nicht ersetzt werden, wenn deren Unterschiede in den Geometriedaten einen bestimmten Wert nicht übersteigen.

5. Verfahren nach einem der vorstehenden Ansprüche, dadurch gekennzeichnet,
   daß zum Berechnen der Zeichenerwartungszonen ZE ein Raster in x-Richtung mit der Periodizität des Zeichenmittenabstands s mit Startpunkt am Schwerpunkt $c_1$ des ersten derjenigen Rechtecke, deren Geometriedaten mit der charakteristischen Zeichengeometrie innerhalb einer vorgegebenen Toleranz übereinstimmen (gutes Zeichen Z) generiert und das Raster hinsichtlich Startpunkt und Periodizität durch globale Fehlerbetrachtung optimal an das Ensemble aller guten Zeichen Z des einheitlich bedruckten Gebiets des Dokuments angepaßt wird.

6. Verfahren nach Anspruch 5, dadurch gekennzeichnet,

   daß zur globalen Fehlerbetrachtung eine Ausgleichsgerade $z = a + b x_i$ so gelegt wird. daß die Summe der Quadrate aller vertikalen Abstände der Meßpunkte T $(x_i; z_i)$ von der Ausgleichsgeraden z ein Minimum wird, wobei
   $x_i$ der Abstand des jeweiligen Rasterpunkts vom Ausgangspunkt $c_0$
   $z_i$ gleich die x-Differenz zwischen dem Schwerpunkt $c_i$ des jeweiligen guten Zeichens Z und dem nächstgelegenen Rasterpunkt ist.
   daß dann entsprechend die partiellen Ableitungen gleich Null gesetzt werden und so die Werte für a und b ermittelt werden. wobei der korrigierte Wert x für den Beginn des Rasters aus den Summen von $c_0$ und a besteht und der korrigierte Zeichenmittenabstandswert d sich berechnet als $d = (1 + b) s$.

**Claims**

1. Method for improving the recognition of machine scripts with fixed script division, in which the blackening segments S from a uniformly printed area of a document for which it is possible to specify a character geometry which is characteristic of the relevant typeface are provided with circumscribing rectangles and the geometric data for the rectangles obtained in this manner are established, characterized in that the geometric data for the rectangles, which match the characteristic character geometry within a prescribed tolerance, are used to calculate ideal character expectation zones for the rectangles whose geometric data are situated outside the prescribed tolerance, in that, in order to recognize an individual character, the total image data situated within the ideal character expectation zone or within the rectangle whose geometric data match the characteristic character geometry within the prescribed tolerance are used in each case.

**2.** Method according to Claim 1, characterized
in that the geometric data comprise the width and relative position of the rectangles in the x direction.

**3.** Method according to Claim 2, characterized
in that, in the case of standard scripts and upper-case scripts, the geometric data additionally comprise the height and position of the rectangles in the y direction.

**4.** Method according to one of the preceding claims, characterized
in that rectangles whose geometric data are situated outside the tolerance are not replaced by an ideal character expectation zone if their differences in the geometric data do not exceed a particular value.

**5.** Method according to one of the preceding claims, characterized
in that, to calculate the character expectation zones ZE, a grid is generated in the x direction with the periodicity of the character centre spacing s with the starting point at the focal point $c_1$ of the first of those rectangles whose geometric data match the characteristic character geometry within a prescribed tolerance (good character Z), and the starting point and the periodicity of the grid are optimally matched to the totality of all the good characters Z in the uniformly printed area of the document by global error consideration.

**6.** Method according to Claim 5, characterized

in that, for the purpose of global error consideration, a compensation line $z = a \div b \, x_i$ is placed such that the sum of the squares of all the vertical distances between the measurement points $T(x_i; z_i)$ and the compensation line z reaches a minimum,
where
$x_i$ is the distance between the respective grid point and the origin point $c_0$,
$z_i$ is equal to the x difference between the focal point $c_i$ of the respective good character Z and the nearest grid point,
in that the partial derivations are then accordingly set equal to zero and the values for a and b are thus ascertained, the corrected value x for the start of the grid comprising the sums of $c_0$ and a and the corrected character centre spacing value d being calculated as $d = (1 \div b) \, s$.

**Revendications**

**1.** Procédé pour améliorer la reconnaissance de textes dactylographiés à espaces fixes entre les caractères, dans lequel les segments S de noircissement d'une région, imprimée de manière uniforme, d'un document pour lequel une géométrie de caractères caractéristiques du type de police concerné peut être indiquée, sont munis de rectangles de circonscription et les données géométriques des rectangles ainsi obtenus sont constatées, caractérisé

en ce que l'on calcule, à partir des données géométriques les rectangles qui coïncident avec la géométrie caractéristique de caractères à une tolérance près prescrite, des zones idéales d'attente de caractères pour les rectangles dont les données géométriques se trouvent à l'extérieur de la tolérance prescrite,
en ce que, pour reconnaître un caractère individuel, on utilise chaque fois toutes les données d'images, qui se trouvent à l'intérieur de la zone idéale d'attente de caractères ou du rectangle dont les données géométriques coïncident avec la géométrique caractéristique de caractères à la tolérance près prescrite.

**2.** Procédé suivant la revendication 1, caractérisé en ce que les données géométriques comprennent la largeur et la position relative des rectangles dans la direction x.

**3.** Procédé suivant la revendication 2, caractérisé en ce que, en cas de polices normalisées et de polices de majuscules, les données géométriques comprennent de plus la hauteur et la position des rectangles dans la direction y.

**4.** Procédé suivant l'une des revendications précédentes, caractérisé en ce que des rectangles dont les données géométriques sont à l'extérieur de la tolérance ne sont pas remplacés par une zone idéale d'attente de caractères, si leur différence dans les données géométriques n'est pas supérieure à une valeur déterminée.

**5.** Procédé suivant l'une des revendications précédentes, caractérisé en ce que, pour calculer les zones ZE d'attente de caractères, on génère une trame dans la direction x ayant la périodicité de la distance s moyenne entre deux caractères avec point de départ au centre $c_1$ de gravité du premier rectangle dont les données géométriques coïncident avec la géométrie caractéristique de caractères à une tolérance près prescrite (bons caractères Z) et on adapte la trame en ce qui concerne le point de départ et la périodicité par observation globale d'erreurs de manière optimale à l'ensemble de tous les bons caractères Z de la région imprimée de manière uniforme du document.

6. Procédé suivant la revendication 5, caractérisé en ce que, en vue de l'observation globale d'erreurs, on place une droite $z = a + b\,x_i$ d'ajustement de telle manière que la somme des carrés de toutes les distances verticales des points T $(x_i ; z_i)$ de mesure aux droites z d'ajustement devient minimum, $x_i$ étant la distance du point de trame associé au point $c_0$ de départ, $z_i$ étant égal à la différence en x entre le point $c_i$ de gravité du bon caractère Z associé et le point de trame placé le plus proche, en ce que les dérivées partielles sont en conséquence annulées et les valeurs pour a et b ainsi déterminées, la valeur x corrigée pour le début de la trame consistant en la somme de $c_0$ et a et la valeur d de distance moyenne entre deux caractères corrigés se calculant comme $d = (1 + b)\,s$.

# Ensemble 1

**Fig. 1**

Ensemble 1

$C_1 S_1$  $S_2$  $S_3$  $S_4 C_2 S_5$  $S_6$  $S_7 C_3$  $C_4 S_8$  $C_5 S_9$  $C_6 S_{10}$  $S_{11}$

**Fig. 2**

ZE1  $S_0$  ZE2  ZE3

Ensemble 1

**Fig. 3**

Fig 4

Fig 5

Fig 6